# EUROPEAN PATENT APPLICATION

(11) **EP 1 727 263 A2**
(43) Date of publication of application: **29.11.2006**
(21) Application number: 06076569.0
(22) Date of filing: 15.08.2000
(51) Int. Cl.: H02K 9/19, H02K 15/04

(54) **Water cooled stator winding of an electric motor**

(30) Priority: 16.08.1999 US 149129 P
(62) Divisional of application: 00955543.4
(71) Applicant: AMERICAN SUPERCONDUCTOR CORPORATION, Westborough, MA 01581-1727 (US)
(72) Inventor: Kalsi, Swarn S., Shrewsbury, MA 01545 (US); Snitchler, Gregory L., Shrewsbury, MA 01545 (US); Gamble, Bruce B., Wellesley, MA 02482 (US); Bushko, Dariusz Antoni, Hopkinton, MA 01748 (US)
(74) Representative: Charig, Raymond Julian

(57) **Abstract**

A cooling device for cooling a stator of the type having windings, electrically insulated from each other including a cooling member, thermally coupled to an external surface of the windings. The cooling member has at least one passage extending through the member to receive a coolant from an external source. Because the passage for receiving the coolant is insulated from the high voltage stator conductors, water having ions (e.g., fresh water) can be used as the coolant for cooling the stator. Allowing the use of fresh water offers tremendous advantages in settings where deionized water is not readily available and eliminates the cost of a water deionization system.

## Description

### Related Application

Under 3 5 USC §119(e)(1), this application claims the benefit of U.S. Provisional Application Serial No. 60/149,129, filed August 16, 1999.

### Background of the invention

The invention relates to cooling a stator of an electric motor.

Electric machines, such as motors and generators, generate heat in their windings when in use and generally require cooling to operate optimally and to avoid damage to their components.

Many electric machines include a rotor assembly surrounded by a stator winding that is cooled by passing a coolant fluid through passages formed in the stator winding conductor itself. For example, cool water is generally pumped through the stator conductor passages to draw heat away from the stator. The heated water is then cooled by a heat exchanger before being recycled through the stator.

In certain applications, high electric fields within a stator prohibit cooling with impure fluids (i.e., those having ions, such as fresh water) which can electrolyze and deposit solid materials and obstruct the passages. Additionally, the impurities in the fluid can ionize and conduct undesirable currents.

Consequently, more expensive de-ionized water is used instead of naturally-occurring water (fresh water) in traditional stator cooling systems. Providing de-ionized water generally requires processing equipment to maintain water purity and resistivity.

### Summary of the Invention

The invention is directed to a cooling device for cooling a stator of the type having windings, electrically insulated from each other.

In a general aspect of the invention, the cooling device includes a cooling member thermally coupled to an external surface of the windings and having at least one passage extending through the member to receive a coolant from an external source.

Because the passage for receiving the coolant does not extend through the stator conductor itself but, rather, through the cooling device that is thermally coupled through ground wall electrical insulation to the stator winding, fresh water can be used as the coolant for cooling the stator. Allowing the use of fresh water is a tremendous advantage in settings where deionized water is not readily available or when the user does not want to incur the expense of deionization equipment. For example, a ship having electric motors with stators cooled in the conventional manner are required to store deionized water for cooling. The proposed externally-cooled arrangement of the invention eliminates this requirement.

Embodiments of the invention may include one or more of the following features.

For example, in one embodiment of the invention, the cooling member includes at least one helically wound tube, which defines a passage. For example, in a stator having an inner bore surface and an outer surface, one helically wound tube is thermally coupled to the inner bore surface and a second helically wound tube is thermally coupled to the outer surface of the stator.

In certain embodiments, the stator may be configured such that the windings of the stator are radially spaced from the longitudinal axis of the stator and are circumferentially spaced from each other. Alternate windings further have end regions which extend radially away from the axis. This arrangement can be used to provide a three-phase stator winding assembly. In this application, the cooling member further includes helically wound tube at the end region of the stator windings. This helically wound tube is thermally coupled to the radially-extending end regions. The helically wound tubes may be formed of a non-magnetic material, such as aluminum or stainless steel.

In another embodiment of the invention, the cooling member includes thermally conductive members in a stack arrangement, with each conductive member having a hole. The thermally conductive members are arranged so that the holes in aggregate define the passage. Each conductive member is preferably electrically isolated from an adjacent conductive member, thereby reducing eddy currents, which can significantly increase heating of the member. Electrical isolation is provided by providing insulative material between the conductive member and corresponding outer surfaces of adjacent windings of the stator.

Each conductive member includes a radially extending section disposed between and thermally coupled to outer surfaces of adjacent windings of the stator. The radially extending sections provide greater surface-to-surface contact between the conductive members and windings.

In certain embodiments, each winding is wound about a first axis and the cooling member is in the form of a helically wound tube wound about a second axis that is transverse to the first axis.

Alternatively, the cooling member is in the form of a concentrically wound tube wound about the first axis. In this case, a first cooling member is disposed on an upper surface of the winding and a second cooling member, in the form of a concentrically wound tube wound about the first axis, is disposed on a lower surface of the winding. The concentrically wound tube has a racetrack shape and may have a saddle shape.

Other advantages and features of the invention will become apparent from the following description and claims.

### Brief Description of the Drawings

FIG. 1 is a perspective view of a single layer, three-phase stator having coil windings.
FIG. 2 is an exploded perspective view of the stator of FIG. 1 including external helical cooling tubes.
FIG. 3 is a cross-sectional schematic representation of the stator and the cooling tubes of FIG. 2.
FIG. 3A is a partial assembly of stator coils with cooling tubes.
FIG. 4 is side cross-sectional view of an alternative embodiment of a stator cooling system.
FIG. 5 is a end on cross-sectional view of the cooling system along the plan A-A of FIG. 4.
FIG. 6 is an enlarged view about portion A of the cooling system of FIG. 5.
FIG. 7 is a perspective view of an alternate embodiment of a stator cooling system for a coil winding.
FIG. 8 is a cross-sectional perspective view of the stator cooling system of FIG. 7.
FIG. 9 is an end view of the stator cooling system of FIG. 7.

### Detailed Description

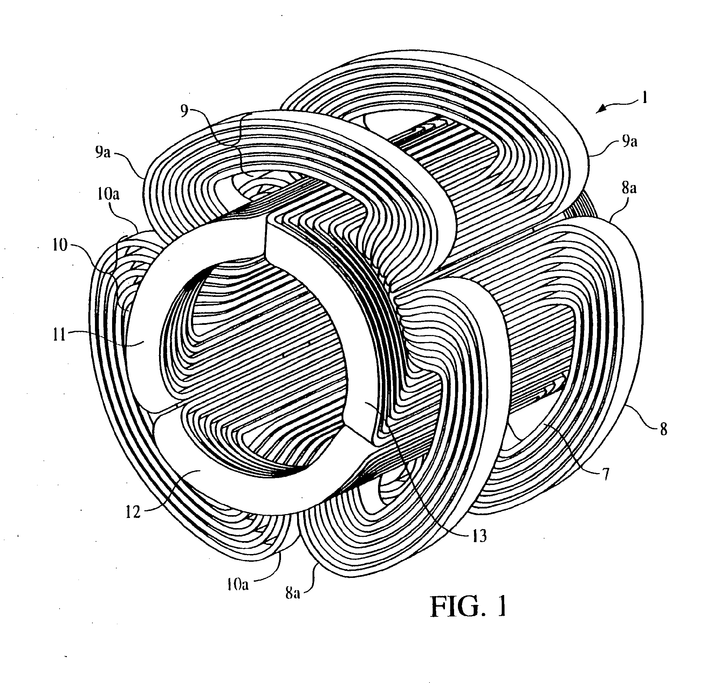

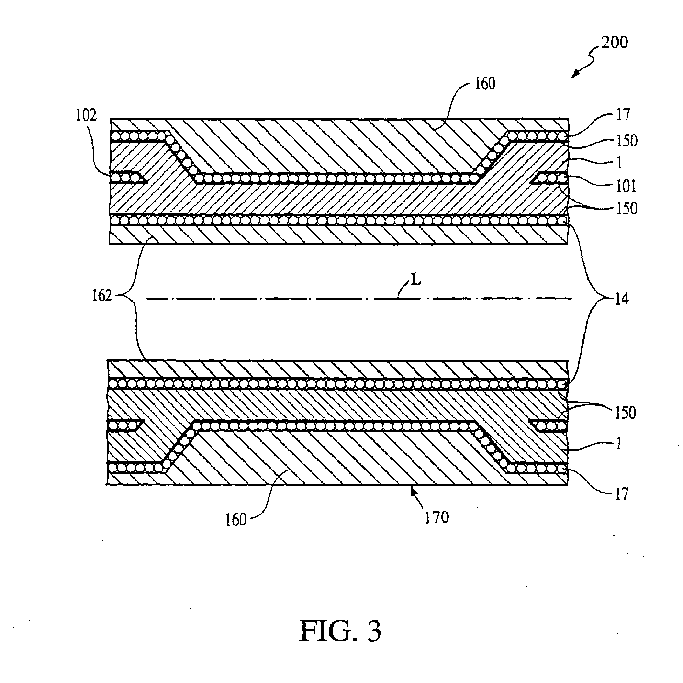

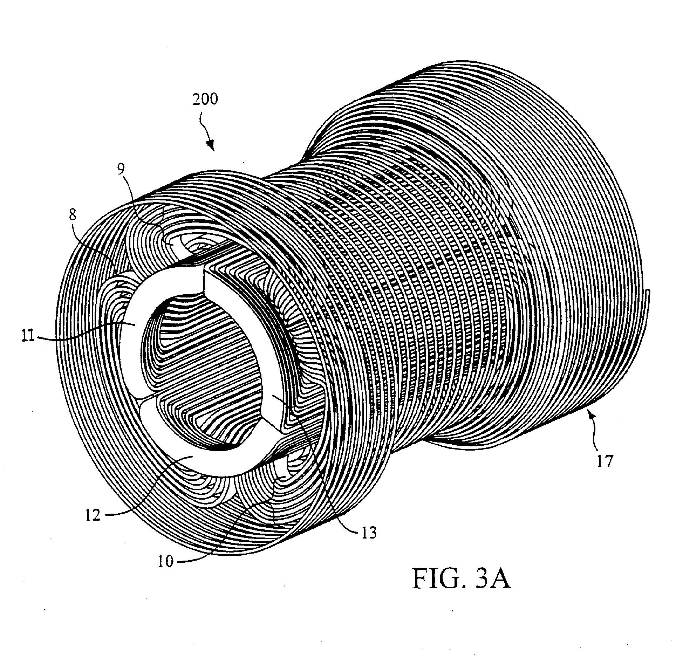

Referring to FIG. 1, a three-phase stator 1 includes multiple phase coil assemblies 8-13, which are arranged into an inner layer of phase coil assemblies 11, 12, 13 and an outer layer of phase coil assemblies 8, 9, 10. The outer layer coil assemblies 8, 9, 10 have end regions 8a, 9a, 10a which extend away from corresponding end regions of adjacent inner phase coils. Each phase coil assembly includes concentric coil windings 7 which are insulated from each other. Note that end regions 8a, 9a, 10a of the outer layer coil assembly 8, 9, 10 are exaggerated in Fig. 1 and are not normally perpendicular to the stator central axis (see Fig. 3). As will be described in greater detail below, the invention is directed to cooling systems which minimize exposure of coolant, here water to the high voltages within the stator coils, thereby allowing the use of fresh water, which contains ions.

Individual phase coil windings are made from any electrically conductive material, e.g., copper and aluminum. Typically, the phase coils are made from copper. Phase coil assemblies can be constructed using different methods.

In the embodiment shown in Fig. 1, for example, each phase coil assembly includes many concentric individually insulated coil windings. Typically, each phase coil assembly can include any number of concentric coil windings depending upon the stator motor design. Additionally, each concentric coil winding can include individually insulated coils assembled together to form the concentric coil winding. The individual coils can be insulated to withstand coil-to-coil voltage and assembled to form the concentric coil winding. Each concentric coil windings is then assembled to form a phase coil assembly, which is insulated to full phase-phase and phase-ground voltage levels.

In another method, a conductor is concentrically wound with adequate turn-to-turn insulation to form a phase coil assembly. Completed phase coil assemblies are insulated to full phase-phase and phase-ground voltage levels. In order to reduce eddy-current losses in these coils, it is generally desirable that any fully transposed Litz-type cable be employed. In certain applications, a Rutherford type conductor is employed. A Rutherford type conductor includes many smaller strands, which are fully transposed to decouple an AC field experienced by a conductor in any orientation. Rutherford conductors are also flexible making the task of coil fabrication easier. All phase coil assemblies are insulated to industry acceptable insulation classes (such as class H and F insulations), which normally dictate the highest temperature that the conductor could be operated at. Likewise, Rutherford type conductors are readily available from a number of vendors such as New England Electric Wire, Lisbon, New Hampshire.

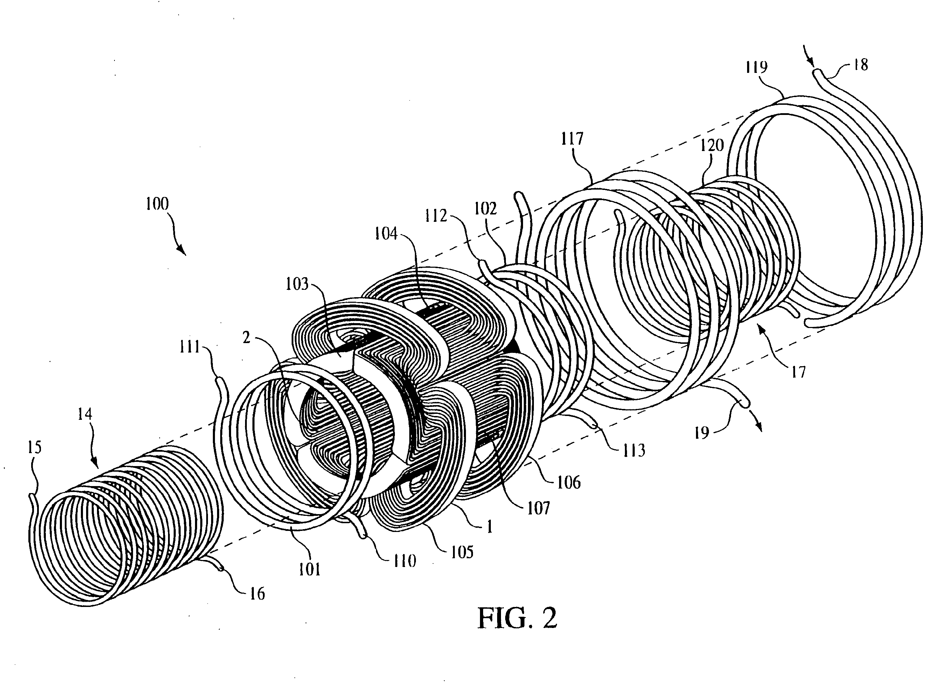

Referring to FIG. 2, a cooled stator system 100 includes a stator inner coil 14 received within a central bore 2 of the stator, an outer coil 17 wrapped about the outer surface of stator 1, and end coils 101, 102 wrapped about ends 103, 104 of the stator. Outer coil 17 includes end portions 117, 119 which surround outer layers 105, 106 of phase coil assemblies 8, 9, 10 and a central portion 120 which surrounds a midsection 107 of the inner layer of all phase coil assemblies 8-13. Each of inner coil 14, outer coil 17, and end coils 101, 102 is in fluid communication with inlets, 15, 18, 110, 112 and outlets 16, 19, 111, 113, respectively.

As shown in Fig. 3, a cooled stator system 200 includes a phase coil 1 wrapped around a non-metallic bore tube 162 having an axis L. Cooling tubes 14, 101, 102 and 17 are applied to phase coil 1 and encased in core 160. Core 160, typically, is an iron core constructed from 0.02 inch thick iron laminations, e.g., those used by the motor industry. The laminations are cut in circular segments and assembled around the stator assembly 200. Alternatively, core 160 is formed by winding an iron wire of high permeability. Core 160 is insulated by a varnish or oxide for eliminating eddy-current heating. Sufficient layers of this wire could be applied to produce a smooth cylindrical outer surface 170 shown in Fig. 3.

Cooled stator system 200 is inserted inside a motor housing. The entire assembly, including stator and motor housing, are impregnated with an epoxy to bond all components of the stator together to produce a monolithic structure. Inner coil 14 is supported within stator 1 by bore tube 162. Inner coil 14, outer coil 17, and end coils 101, 102 are electrically insulated from stator 1 by an insulator 150. Insulator 150 maintains coils 14, 17, 101, 102 at a ground potential permitting the use of fresh water, which contains ions. Insulator 150 is made from any insulating material that can withstand operating voltages and the heat generated by stator 1. In general, insulator 150 has a thickness to withstand the operating voltage. The thickness of insulator 150 is determined by the dielectric strength (insulating properties) of the material. For example, the thickness of a high dielectric strength insulating material can be less than the thickness of a low dielectric strength insulating material. Typically, insulator 150 has a thickness between about 0.001 to 0.100 inches. Examples of insulative materials include, but are not limited to, epoxy, mica, and glass.

In operation, heat is transferred from the stator conductors through insulator 150 and into coils 14, 17, 101, 102, which contain cooled fresh water. By having a higher fluid pressure at inlets 15, 18, 110, 112 than at outlets 16, 19, 111, 113 cold fluid is forced to flow through coils 14, 17, 101, 102. Thus, heat transferred to the fresh water is removed from the cooled stator system. To improve cooling of stator 1, inner coil 14 removes heat from the inside while the other outer coil 17, and end coils 101, 102 remove heat from the outside. Fig 3A shows phase coils 8-13 surrounded by cooled tube 17.

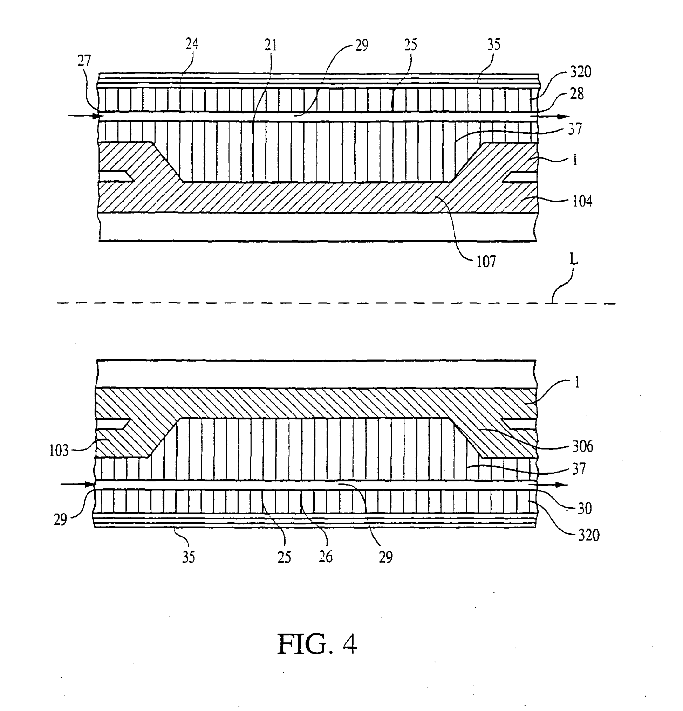

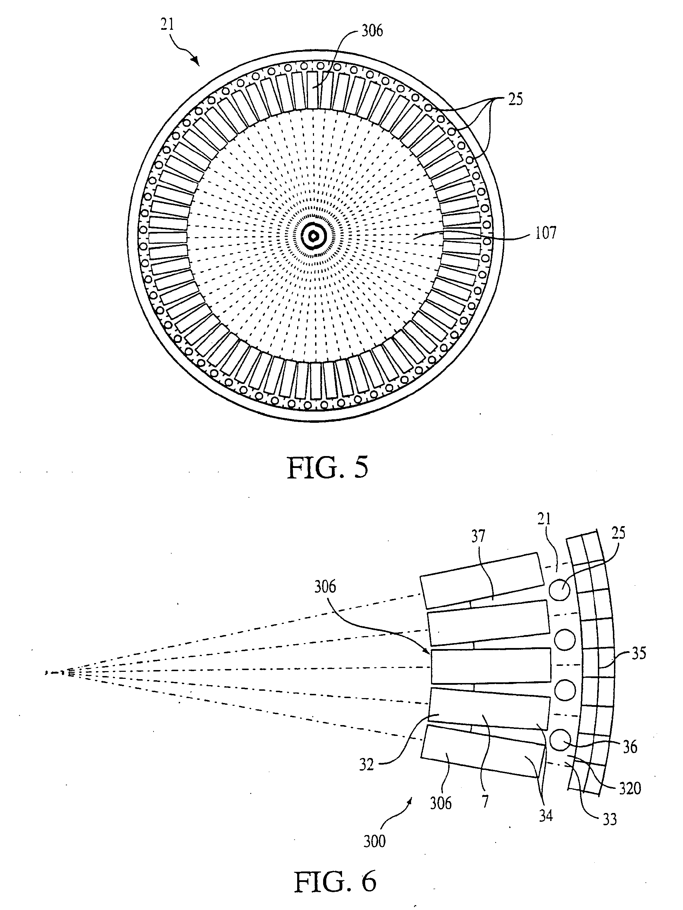

Referring to Fig. 4, in another embodiment, a cooled stator system 200 includes a stator 1, as shown in Fig. 1, encased by a thermally conducting material 24. Thermally conducting materials 27 and 37 are formed by laminating a series of plates 21 around the midsection 107 of the stator 1. The phase coils 8, 9, 10, 11, 12 and 13 are assembled around bore tube 162 such that they are contacting each other at the bore tube surface. However, coil sides are separated from each other at the outer surface of coil assembly 7. This space is filled with wedge shape sections 37 (here, aluminum) of plates 21 as shown in Fig. 6. The aluminum wedge shape sections 37 help to remove heat from coil sides 7. In certain applications, aluminum wedge shape sections 37 are manufactured in the form of laminations to reduce eddy-current losses. These laminations also have holes 25 which are used for passing fresh water for cooling. It is further possible to install these wedge shape sections on each phase coil (8 through 13), epoxy impregnate the phase coil assembly and test it electrically and thermally before incorporating it into the stator assembly. When all phase assemblies are assembled, stator coil assemblies with cooling wedge shape sections form the assembly 12 shown in Fig. 5.

Plates 21 are made from a thermally conducting material. Examples of thermally conducting materials include metals, e.g., copper, iron and aluminum, as well as flexible graphite materials, such as Grafoil®, a product of UCAR International Inc., Nashville, Tennessee. Grafoil® advantageously has a thermal conductivity similar to that of copper while having an electrical resistivity characteristic approximately 100 times that of copper. Typically, the plates are formed from a non-magnetic material, e.g., copper or aluminum. Each plate 21 includes a body portion 320 and the wedge shaped section 37 which extends radially towards the central axis of the stator. Typically, plates 21 are aligned between ends 103, 104 of the stator such that a passage 25 from each plate forms an outer bore 29 for fitting a cooling tube. Outer bore 29 is parallel to the central axis (L) and provides a path for the flow of fresh water. Each plate 21 also can be insulated from adjacent plates to reduce eddy currents, which cause increased heating.

Fig. 5 shows a top view of plate 21 including the coils 306 of stator 1, body 320, and tooth portions 37. Each plate can include passages 25, equally spaced and radially positioned about the circumference of a stator midsection 107. For example, each plate 21 can include a passage for each winding of the stator. As shown in greater detail in Fig. 6, coil 306 includes adjacent windings 6, 7 having inner ends 32 and outer ends 34. Tooth portion 37 is wedged between adjacent windings so that the windings touch at inner ends 32, i.e., on the bore side, and are spaced apart on outer ends 34. Inner body 37 provides additional surface area for the transfer of heat between the windings and the coolant manifold.

Alternate embodiments may redirect fluid from one passage to another to form a serial fluid flow loop. For example in FIG. 6, passage 25 may be connected to passage 36 so that fluid from passage 25 goes through passage 36 before it leaves the cooling system. Other embodiments may cool warm water from the cooling system by running it through a heat exchanger before pumping it through the system again. Alternatively, water to the cooling system could come from a main water supply and could be discarded after use.

In still other embodiments, the stator winding assembly is cooled using a stator cooling system having a form similar to the stator winding itself.

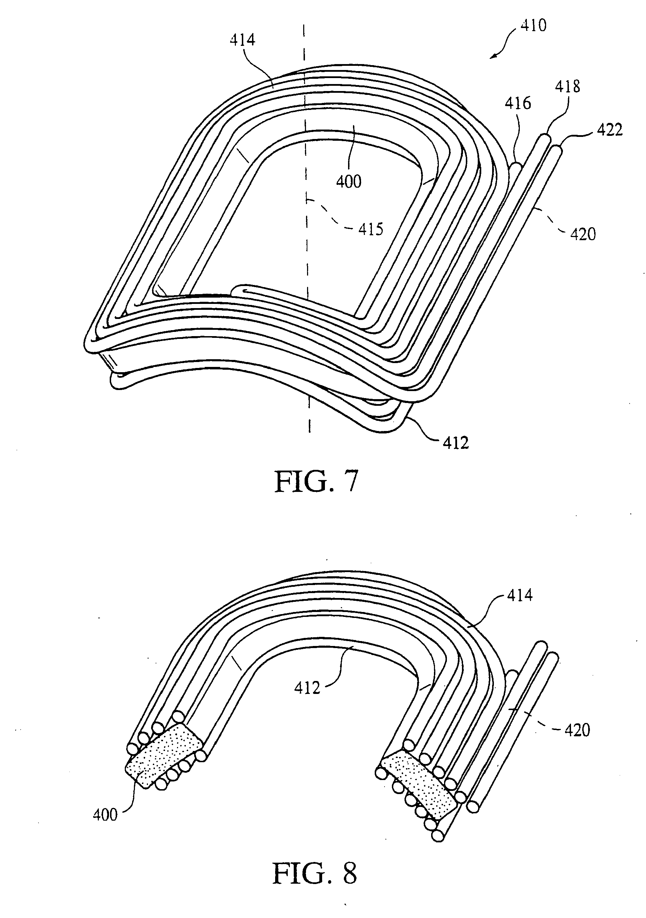

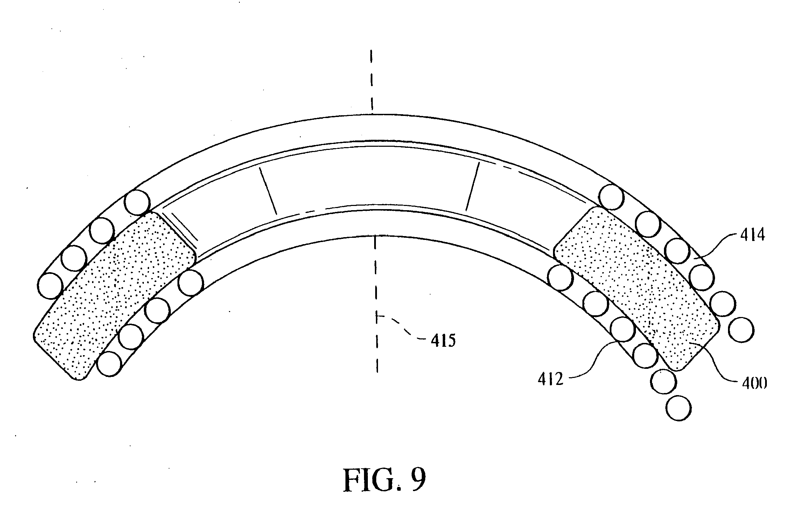

Referring to Figs. 7-9, for example, a stator winding 400 of the type similar to phase coil assemblies 11, 12, and 13 of three phase stator 1 (see Fig. 1) is shown independent from its neighboring phase coil assemblies. In this embodiment, a cooling system 410 includes a pair of cooling tubes 412, 414 concentrically wound about an axis 415 of stator winding 400 and positioned on opposing sides of stator winding 400. Note that axis 415 is transverse to axis L of the embodiment of the cooled stator system 200 shown in Fig. 3. In particular, cooling tubes 412 are positioned to be in thermal contact with the inner surface and outer surface of stator winding 400, respectively.

As was the case with the cooling tubes described above, cooling tubes 412, 414 are formed of a non-magnetic material, such as aluminum or stainless steel. In many applications, stainless steel is preferable because of its resistance to corrosion and low eddy current loss characteristics.

Unlike the embodiments described above in conjunction with Figs. 1-6, cooling tubes 412, 414 are concentrically wound into a saddle-shaped, racetrack form, similar to that of stator winding 400. As shown in Fig. 8, the cooling tubes are wound to conform to the generally curved surface of the stator winding and are wound in bifilar fashion.

By "bifilar", it is meant that two lengths of each cooling tube are wound together, in parallel, one over the other (wound in-hand) so that each cooling tube 412, 414 has a helical arrangement with an inlet 416, 418 and outlet 420, 422 extending from the outer periphery of respective ones of the cooling tubes. Winding the cooling tubes using the bifilar approach advantageously allows the inlet and outlet to be positioned adjacent each other without requiring a length of the tube extending back over the wound cooling tube. Moreover, the cooling tubes themselves form a coil which links magnetic flux from the stator field winding, which it cools. The bifilar winding approach reduces voltage and circulating currents flowing through the cooling tube, thereby reducing eddy current losses.

In one approach for winding cooling tubes 412, 414 in a bifilar manner, a length of the cooling tube is folded upon itself at its midpoint to form a U-shaped bend 424 (Fig. 7). The length of folded cooling tube is then concentrically wound outwardly, one turn over the other.

With respect to a multi-phase stator having multiple stator windings (e.g., the three-phase stator assembly of Fig. 1), cooling tubes 412, 414 of cooling system 410 are individually potted to each of the stator windings thereby providing a separate and independently testable subsystem.

Other embodiments are within the following claims.

## Claims

1. A stator assembly (200) comprising:
a plurality of stator coil assemblies (8, 9, 10, 11, 12, 13); and
a stator coil support structure (27, 37) constructed of a non-magnetic, thermally-conductive material (24), said stator coil support structure including an axial passage (107, 162) for receiving a rotor assembly,
the stator coil support structure (27, 37) defining a plurality of channels positioned about said axial passage (107, 162), each said channel having a stator coil assembly winding (6, 7) therein.

2. The stator assembly (200) of claim 1, wherein the stator support structure (27, 37) includes a body portion (320), the body portion comprising a plurality of axial cooling passages (29, 25, 36).

3. The stator assembly (200) of claim 2 further comprising a coolant circulation system for circulating a cooling liquid through said axial coolant passages (25, 36).

4. The stator assembly (200) of claim 1 wherein said non-magnetic, thermally conductive material (24) is a sheet material, said sheet material being laminated to form said stator coil support structure (27, 37).

5. The stator assembly (200) of claim 4 wherein said sheet material includes a graphite-based material.

6. The stator assembly (200) of claim 1 further comprising an epoxy filler disposed between said stator coil assemblies (8, 9, 10, 11, 12, 13) and said stator coil support structure (27, 37).

7. A rotating machine comprising:
the stator assembly (200) of any of claims 1 to 6; and
a rotor assembly configured to rotate within said stator assembly.

8. A method of manufacturing a stator coil support structure (27, 37) comprising:
forming a non-magnetic, thermally conductive cylindrical structure to define a plurality of channels positioned about an axial passage (107, 162) of the non-magnetic, thermally conductive cylindrical structure; and
positioning a stator coil assembly winding (6, 7) in each of the channels.

9. The method of claim 8 wherein forming the non-magnetic thermally conductive cylindrical structure (27, 37) includes laminating multiple layers (21) of a non-magnetic, thermally conductive sheet material (24) to form the non-magnetic thermally conductive cylindrical structure.

10. The method of claim 8 further comprising providing a plurality of axial coolant passages (25) in the non-magnetic, thermally conductive cylindrical structure (27, 37).

11. The method of claim 8 further comprising depositing an epoxy filler between the stator coil assemblies (8, 9, 10, 11, 12, 13) and the non-magnetic, thermally conductive cylindrical structure (27, 37).

12. The method of any of claims 8 to 11 further comprising inserting into each axial channel a heat-sinking member (37), thus forming a channel between each pair of adjacent heat-sinking members.

13. An apparatus for cooling a stator of the type having a plurality of windings, each winding being electrically insulated from others of the windings, the apparatus comprising a cooling member thermally coupled to an external surface of the windings, the cooling member having at least one passage extending therethrough for receiving a coolant from an external source.

14. The apparatus of claim 13 wherein the cooling member includes at least one helically wound tube, which defines the at least one passage.

15. The apparatus of claim 14 wherein the windings of the stator are configured to define an inner bore surface and an outer surface and the cooling member includes a plurality of helically wound tubes, a first one of the helically wound tubes thermally coupled to the inner bore surface and a second one of the helically wound tubes thermally coupled to the outer surface.

16. The apparatus of claim 15 wherein the windings of the stator are radially spaced from a longitudinal axis of the stator and are spaced from each other, with alternate ones of the windings having end regions which extend radially away from the axis, the cooling member further including an end region helically wound tube thermally coupled to the radially-extending end regions.

17. The apparatus of claim 13 wherein each of the phase coils includes a concentrically wound single conductor.

18. The apparatus of claim 13 wherein each of the phase coils include a plurality of concentrically wound coils.

19. The apparatus of claim 15 wherein the plurality of helically wound tubes are formed of a non-magnetic material.

20. The apparatus of claim 13 wherein the cooling member includes a plurality of thermally conductive members in a stack arrangement, each conductive member having a hole, such that the holes in aggregate the at least one passage.

21. The apparatus of claim 20 each conductive member is electrically isolated from an adjacent conductive member.

22. The apparatus of claim 21 further comprising insulative material disposed between the conductive member and corresponding outer surfaces of adjacent windings of the stator.

23. The apparatus of claim 20 wherein each conductive member includes a radially extending section disposed between and thermally coupled to outer surfaces of adjacent windings of the stator.

24. The apparatus of claim 20 wherein the plurality of thermally conductive members is formed of a non-magnetic material.

25. The apparatus of claim 14 wherein each winding is wound about a first axis and the cooling member is in the form of a helically-wound tube wound about a second axis, transverse to the first axis.

26. The apparatus of claim 14 wherein each winding is wound about a first axis and the cooling member is in the form of a concentrically wound tube wound about the first axis.

27. The apparatus of claim 26 wherein the cooling member is disposed on an upper surface of the winding, the apparatus further comprising a second cooling member in the form of a concentrically-wound tube wound about the first axis, the second cooling member disposed on a lower surface of the winding.

28. The apparatus of claim 26 wherein the concentrically wound tube has a racetrack shape.

29. The apparatus of claim 28 wherein the concentrically wound tube has a saddle shape.

30. The apparatus of claim 27 wherein the concentrically wound tube is formed of a non-magnetic material.
